# EUROPEAN PATENT APPLICATION

(11) **EP 2 175 416 A1**
(43) Date of publication of application: **14.04.2010**
(21) Application number: 08166440.1
(22) Date of filing: 13.10.2008
(51) Int. Cl.: G06T 5/00

(54) **Method and system for image deblurring**

(71) Applicant: Sony Corporation, Tokyo 108-0075 (JP)
(72) Inventor: Lei, Zhichun, 70327 Stuttgart (DE); Zimmermann, Klaus, 70327 Stuttgart (DE)
(74) Representative: Körber, Martin Hans

(57) **Abstract**

The present invention relates to a method for image deblurring comprising the steps of splitting an image into different image parts and performing a deconvolution on a subset of image parts, said subset comprising one or more image parts.

The present invention further relates to a system for image deblurring comprising a processing unit (3), said processing unit (3) comprising an image splitting component (6) for splitting an image into different image parts and a deconvolution component (8, 8a) for performing a deconvolution on a subset comprising one or more image parts.

## Description

The present invention relates to a method for image deblurring, to a computer program product for performing the steps of the method, to a system for image deblurring and to a device comprising a system for image deblurring. Specifically, the present invention refers to the field of performing image deblurring with a reduced complexity.

In the field of acquiring, processing and displaying images several types of distortions influence the quality of the image. In optics and imaging an optical distortion takes place in any kind of imaging instrument thus creating a blurred image. In particular images suffering from fast motion or jiggles during capturing are blurred and thus seem less clear or less sharp.

In order to deblur the image a deconvolution step is applied to the image in order to reverse the process of distortion. More generally speaking, deconvolution is an algorithm-based process to reverse the effects of convolution on recorded data.

In the field of image processing in order to carry out an effective deconvolution, most deconvolution methods are iterative and very computation-intensive. This leads to a high computational load of the image deconvolution. Additionally, the increasing image size poses a challenge to the implementation of the image deconvolution.

It is therefore an object of the present invention to reduce the disadvantages of the prior art. Specifically, it is an object of the present invention to provide a method and system for image deblurring having reduced complexity and requiring less computational load.

This object is addressed by the features of the independent claims.

Advantageous features and embodiments are the subject-matter of the dependent claims.

The present invention will now be explained in more detail in the following description of preferred embodiments in relation to the enclosed drawings in which
Figure 1 shows a schematic block diagram of a device adapted to carry out image deconvolution,
Figure 2 shows a schematic block diagram of an image deblurring system according to the present invention,
Figure 3a shows schematically the steps of wavelet transformation,
Figure 3b shows schematically the steps of inverse wavelet transformation,
Figure 4 shows one embodiment of the present invention,
Figure 5 shows a further embodiment of the present invention, and
Figure 6 shows a flowchart showing the process steps of the method according to the present invention.

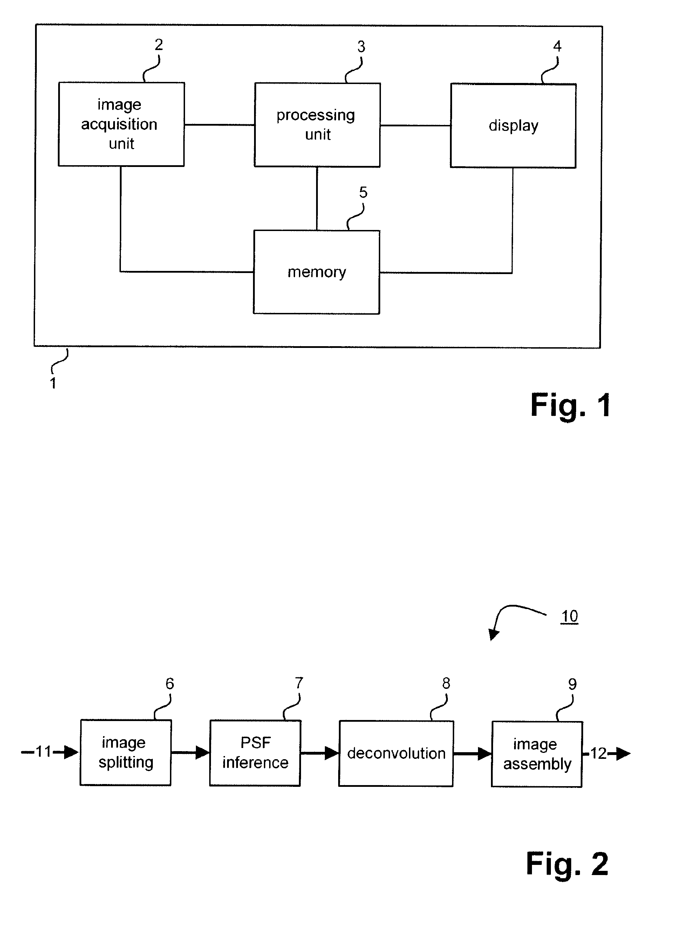

Figure 1 shows a schematic block diagram of a device 1 adapted to perform the method for image deblurring according to the present invention. The device 1 can be any type of device adapted to process images, such as a camera for still images and/or video sequences, a mobile phone, PDA, a notebook, a PC, a television or any other type of device adapted to process images and to process a method for image deblurring.

The device 1 comprises an image acquisition unit 2, which is adapted to acquire an image. The image acquisition unit 2 herefore may comprise components and/or for example a CCD sensor for acquiring an image of an object externally to the device 1. Alternatively or additionally, the image acquisition unit 2 may comprise means for reading out an image from a storage, receiving an image over a wired or wireless connection or any other type of means adapted to acquire an image. The term image according to the present invention is hereby referred to a single still image or a sequence of images constituting a video sequence.

The device 1 further comprises a memory 5 adapted to store any type of data, information or programs, and the memory 5 can comprise one or more parts of volatile or non-volatile storages. The device 1 optionally can further comprise a display 4 adapted to display images, whereby the image can either be read out from the memory, received from the image acquisition unit or from any other component within the device 1.

The image acquisition unit 2, the display 4 and the memory 5 are all connected to and in data communication with a processing unit 3, which supervises all processing steps carried out within the device 1, such as storing, reading, transmitting, deleting or processing any type of data or information.

The processing unit 3 further comprises all the components necessary for carrying out the method according to the present invention. These components can either be implemented as processing steps carried out by a software or can be implemented as hardware components or can be implemented as a combination of above-mentioned possibilities.

With reference to figure 2 a system for image deblurring according to the present invention will now be explained. The system 10 according to the present invention hereby bases on the idea to split an image into different image parts and to perform deconvolution only on a subset of the image parts, i.e. not on all image parts. Hereby, said subset can comprise one or more of the image parts. The remaining image parts which are not comprised in the subset, can either not be deconvolved at all or a simplified deconvolution can be applied to one or more of these remaining image parts. In any case, the deconvolution is only carried out on a subset of image parts so that the computational load and the complexity of the deconvolution step is reduced.

The blurred image data 11 are herefore submitted to an image splitting component 6. The image splitting component 6 splits the image into different image parts, i.e. into at least two image parts. The image splitting can be accomplished according to different methods.

One possibility is to adopt a pattern recognition, which analyses the image in order to identify different cohesive image parts, e.g. in order to recognize foreground parts and background parts within the image. The image splitting component 6 can then split the image into these different image parts, e.g. into one or more foreground parts and one or more background parts.

Another possibility is to split the image into different frequency bands by frequency band splitting. According to a preferred embodiment of the present invention the splitting of the image is accomplished by wavelet transformation which splits the image into different frequency bands.

In a preferred embodiment, based on a part of the image parts a point spread function inference is accomplished, i.e. a point spread function is calculated. The term part hereby intends to refer to one or more, but not all of the image parts. In another embodiment the PSF can also be calculated based on all image parts.

Generally, in order to reverse the process of distortion that takes place in imaging instruments, deconvolution is adopted. The usual method is to assume that the optical path trough the imaging instrument is optically perfect, convolved with a point spread function (PSF), that is a mathematical function that describes the distortion in terms of the pathway a theoretical point source of light (or other waves) takes through the instrument. If this function can be determined, it is then a matter of computing its inverse or complementary function and convolving the deblurred image with that. The result is the original unblurred image.

In many cases, finding the true PSF is impossible and usually an approximation of it is used and it has to be theoretically calculated. The accuracy of the approximation of the PSF will dictate the final result. Different algorithms can be employed to give better results at the prize of being more computationally intensive.

When the point spread function is unknown it may be possible to deduce it systematically trying different possible PSFs and accessing whether the image has improved. One possible iterative algorithm for this purpose according to the present invention is the Richardson-Lucy deconvolution algorithm or any other iterative algorithm. The Richardson-Lucy algorithm is described in detail in document Richard L. White "Image restoration using the damped Richardson-Lucy method", Space Telescope Science Institute, Baltimore, which is incorporated herein by reference. Another possibility is to use as non-iterative algorithm the Wiener deconvolution or any other non-iterative algorithm.

The PSF inference component 7 deduces from all or preferably from a part of the image parts the point spread function and then in the deconvolution component 8 the deconvolution is carried out. The deconvolution component 8 hereby comprises at least a deconvolution component 8a for carrying out the deconvolution according to the provided deconvolution algorithm. Additionally, the deconvolution component 8 can further comprise a simplified deconvolution component 8b adapted to carry out one or more types of simple or less demanding convolutions.

The deconvolution is performed on the subset of image parts and optionally, a simplified deconvolution is performed on other image parts not being part of the subset. After the deconvolution the image parts, which all or which only partly have been deconvolved, are submitted to an image assembly component 9, which reassembles the image parts thereby finally obtaining a deblurred image 12.

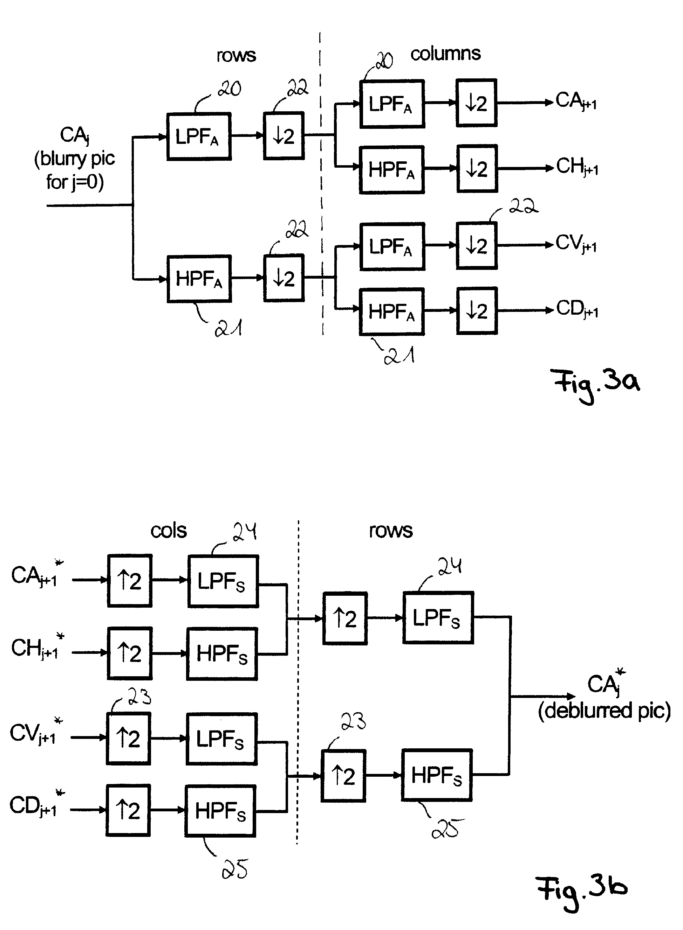

As already described splitting the image into different image parts can be accomplished according to a variety of methods. According to one preferred embodiment the image is split into different parts by applying a one level wavelet transformation. The one level wavelet transformation is schematically shown and explained in the following with reference to figure 3a.

Hereby, CAⱼ, CHⱼ, CVⱼ and CDⱼ refer to coefficients matrices. The index j hereby refers to the level of wavelet transformation. For the original blurred image the index j=0 and after the one level wavelet transformation the index is referred to as j+1. Additionally, in order to distinguish coefficients before and after the deconvolution step, the coefficients having passed the deconvolution steps are indicated with *.

The original blurred image 11 is submitted to the image splitting component 6, where the wavelet transformation is performed. The wavelet transformation in the following will be referred to also as wavelet decomposition or wavelet analysis. In figure 3a several high pass filters 21 and low pass filters 20 are shown. In order to indicate that the respective filters are used in the wavelet analysis, the filters are indicated as LPF_{A} and HPF_{A}.

The blurred picture 11 is submitted to the first low pass filter 20 and the first high pass filter 21 where the frequencies are split into two bands. Afterwards, a subsampling in each frequency band is performed by a subsampling component 22, i.e. each second value along a row is dropped. Each of the frequency bands is then again submitted to a low pass filter 20 and a high pass filter 21 and again split into two frequency bands. Afterwards again a subsampling step along the columns is accomplished. It is to be noted, that the first and second subsampling step can each be carried out along the rows or the columns and are not limited to the shown embodiment. Thereby, four frequency bands are obtained, which are referred to as approximation coefficients matrix CA, horizontal detail coefficients matrix CH, vertical detail coefficients matrix CV and diagonal detail coefficients matrix CD.

The approximation coefficients are low frequency elements resulting from the wavelet transformation. Though the wavelet transformation operates on the entire image, the approximation coefficients correlate to the low frequency elements of the image as defined by the chosen wavelet function. Likewise, the detail coefficients are high frequency elements resulting from the wavelet transformation and are correlated to the high frequency elements of the image. The detail coefficients consist of vertical, horizontal and diagonal coefficient matrices which are products of performing a wavelet transformation on vertical, horizontal and diagonal vectors of the image separately.

After splitting the image into different image parts, a PSF is calculated and deconvolution on a subset of the image parts will be performed, which will be explained in detail later on. As already mentioned, optionally a simplified deconvolution can be performed on other image parts not being part of the subset.

Figure 3b now shows the inverse wavelet transformation which is used to reconstruct or synthesize the different frequency bands. The four coefficient matrices, which have been completely or partly deconvolved, are therefore fed to an upsampling component 23 which upsamples the matrices along the columns. The bands are then submitted to a low pass filter 24 and a high pass filter 25 for synthesizing. In order to indicate that the respective filters are used in the wavelet synthesizing, the filters are indicated as LPF_{S} and HPF_{S}. Thereby two frequency bands are merged into one frequency band which is then again fed to an upsampling component 23 and afterwards again to a low pass filter 24 and a high pass filter 25 in order to obtain the final reassembled image. Since between the splitting and the reassembling the deconvolution and optionally the simplified deconvolution has been carried out, the final image is now the deconvolved deblurred image.

For achieving a deblurred image a point spread function has to be deduced and then based on the point spread function deconvolution has to be carried out. The present invention now proposes to perform the deconvolution on a subset of the image parts in order to reduce the complexity and the computational load. Additionally, the point spread function can also be calculated based only on a part of the image parts and not based on all image parts to achieve a further reduction of complexity.

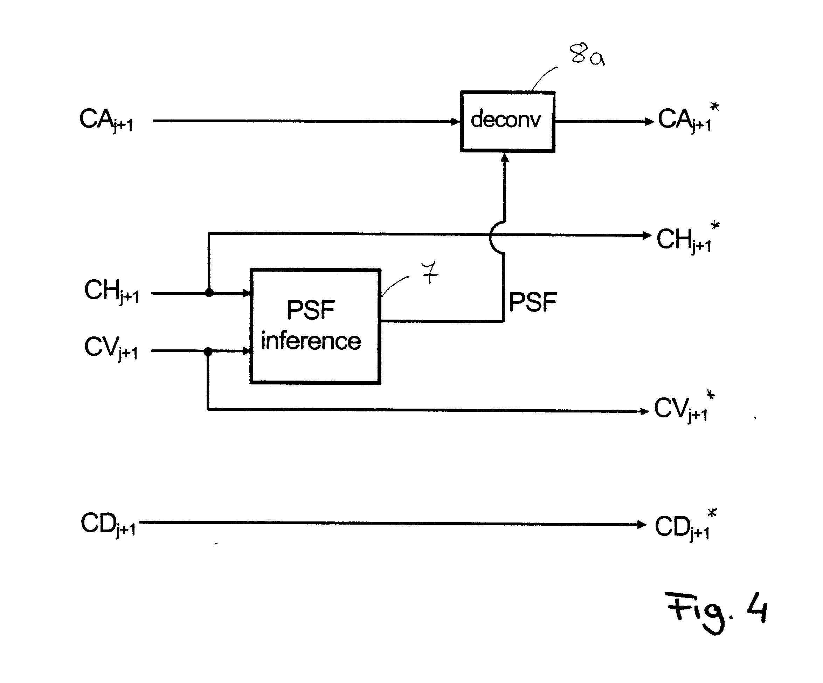

One embodiment of the present invention will now be explained with reference to figure 4. In this embodiment only the horizontal detail coefficients matrix and vertical detail coefficients matrix CHⱼ₊₁ and CVⱼ₊₁ are submitted to the point spread function inference component 7 for deducing the point spread function. In this embodiment, since the PSF is calculated based only on a part of the image parts, a reduction in computational load can be achieved.

Depending on the type of image splitting and depending on the wanted reduction in computational load a subset of the image parts is selected and is submitted to the deconvolution component 8a. In the embodiment shown in figure 4 only the approximation coefficient matrix CAⱼ₊₁ is submitted to the deconvolution component 8 and deconvolved based on the previously calculated point spread function. The other image parts are not deconvolved.

In order to not only reduce the computational load of deconvolution but also in order to have almost no impact on image quality, the present invention further proposes to select the subset of image parts to be deconvolved in such a way that said subset component comprises the majority or even almost of image information. Majority hereby intends to refer to more than a half of the image information. In the embodiment shown in figure 4 the deconvolution is carried out on the approximation coefficient matrix which contains most of the image information.

This exploits the fact that natural images usually do not contain many detail components and the blurry ones contain even fewer details, i.e. contain little image information. Therefore, the deconvolution is only carried out with the one or more image parts or frequency bands that contain most or even almost all of the information.

When using wavelet transformation the image is separated into one low pass subimage, i.e. the approximation coefficient matrix, and three detail sub-images, i.e. the horizontal detail, the vertical detail and the diagonal detail matrices. The three detail sub-images of a blurry image contain little image information. Therefore, in the embodiment of figure 4 the deconvolution of the three detail sub-images is omitted. With this embodiment since CHⱼ, CVⱼ, CDⱼ and CAⱼ are of the same size, the deconvolution complexity can be reduced by ¾ of the original one.

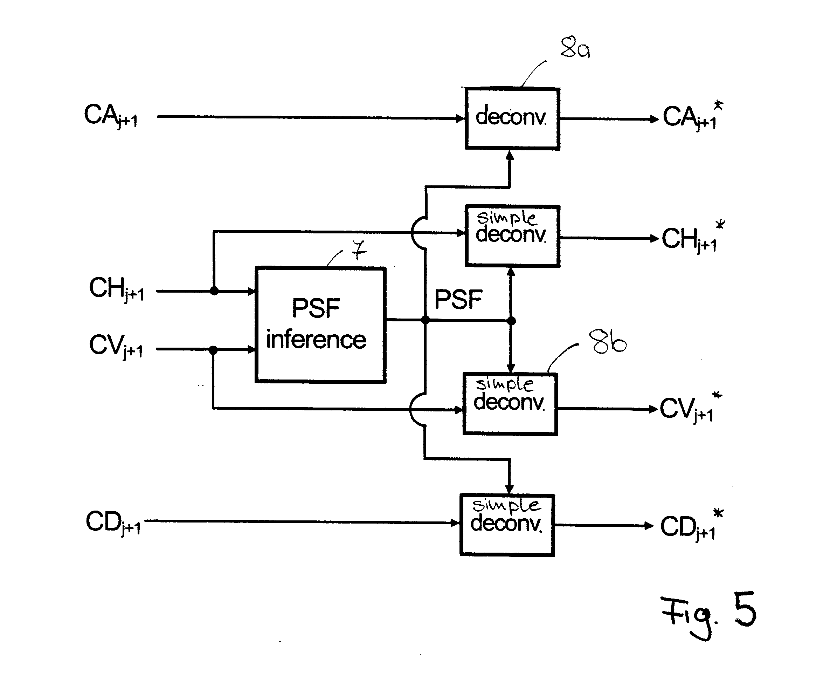

Figure 5 shows a further embodiment of the present invention. In this embodiment like in the previous explained embodiment the point spread function is calculated based on two frequency bands CHⱼ₊₁ and CVⱼ₊₁. Afterwards, the deconvolution is carried out only on the approximation coefficients matrix. The other frequency bands are submitted to a simple deconvolution component 8b, which performs a less demanding or simplified deconvolution on the coefficient detail matrices. Otherwise the simple deconvolution component 8a can perform the same deconvolution method but with a lower parameter requirement, for instance by reducing the iteration number of iterative deconvolution methods.

It is to be noted that the present invention is not limited to the shown embodiments. The point spread function can be calculated based on one, a part or on all of the image parts. Only according to a preferred embodiment, the point spread function is calculated based on a part of the image parts.

Further, the subset, which is deconvolved using the deconvolution method, can comprise one or more image parts but does not comprise all image parts. The other image parts or only some of the other image parts can then be deconvolved with a simplified or less demanding deconvolution method as explained above. Alternatively, different simplified deconvolution methods can be used adapted to the amount of image information contained in the different image parts. The deconvolution of the other image parts can also be completely omitted.

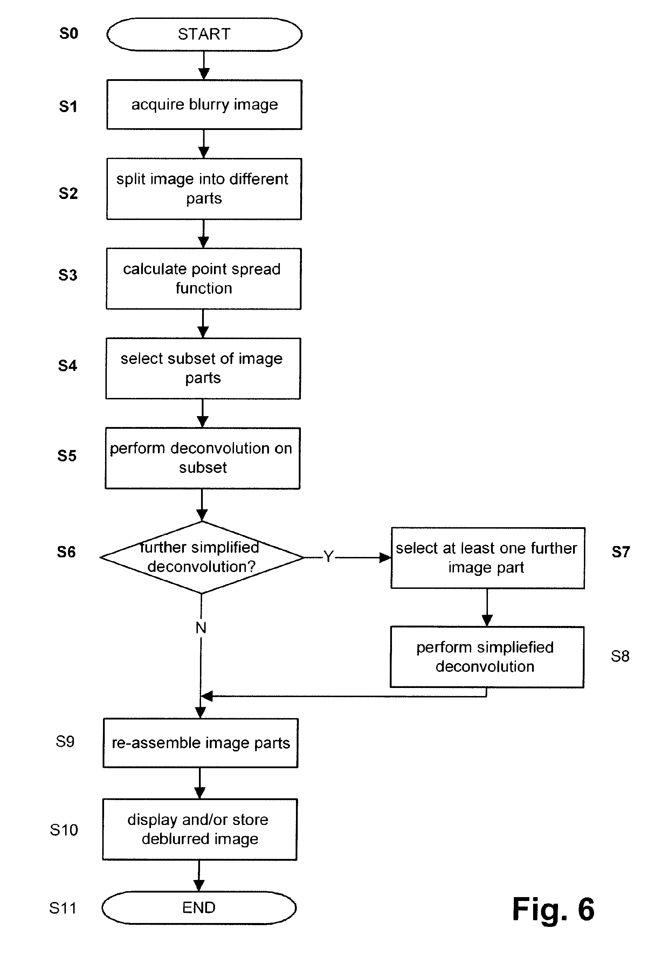

The method according to the present invention will be explained in detail with reference to figure 6.

The process starts in steps S0. In step S1 a blurry image is acquired as previously described. In the next step S2 the image is split into different parts by any of the above described methods.

In the next step S3 the point spread function is calculated based on one, a part of or all of the image parts.

In the next step S4 the processing unit 3, based on the type of image splitting and the type of deconvolution process adopted, selects a subset of the image parts, whereby said subset comprises one or more image parts.

In the next step S5 the subset is then deconvolved with the deconvolution method.

In a next step S6 it is decided whether a further simplified deconvolution is provided to be performed on at least some of the image parts not being comprised in the subset previously deconvolved. If in step S6 it is decided that no further deconvolution is provided the process continues with step S9, where the image parts are reassembled for example by using inverse wavelet transformation.

Otherwise, if in step S6 it is decided that the further simplified deconvolution is provided, then in the following step S7 at least one further image part not being comprised in the subset is selected and in step S8 a simplified deconvolution is performed. The process then in any case continues with step S9, with reassembling the image parts. In the next step S10 the deblurred image is then displayed and/or stored. The process ends in step S11.

The present invention provides a method and system for reducing significantly the complexity of deconvolution by applying the deconvolution only on a subset of the image parts. According to a preferred embodiment the subset which is deconvolved is further selected in such a way that a subset contains most or even almost all of the image information. Thereby a reduced complexity with a high image quality at the same time can be achieved.

With the present invention when deblurring an image a reduced complexity and reduced computational load can be achieved, but at the same time, the image quality does not differ significantly compared with prior art.

## Claims

1. Method for image deblurring
comprising the steps of
splitting an image into different image parts and
performing a deconvolution on a subset of image parts, said subset comprising one or more image parts.

2. Method according to claim 1,
comprising the step of
selecting said subset of one or more image parts in such a way, that said group comprises the majority of image information.

3. Method according to claim 1 or 2,
wherein said step of splitting the image is accomplished by frequency band splitting.

4. Method according to any of the preceding claims,
wherein said step of splitting the image is accomplished by one level wavelet transformation and
wherein the image is split into an approximation coefficients matrix, a horizontal detail coefficients matrix, a vertical detail coefficients matrix and a diagonal detail coefficients matrix.

5. Method according to claim 4,
comprising the step of
performing deconvolution on the approximation coefficients matrix.

6. Method according to any of the preceding claims,
comprising the steps of
performing a simplified deconvolution on at least one of the image parts not being part of the subset.

7. Method according to any of the preceding claims,
comprising the steps of
calculating the point spread function for deconvolution based on a part of the image parts.

8. Computer program product for performing the steps of the method according to any of claims 1 to 7 when executed by a computer.

9. System for image deblurring
comprising
a processing unit (3),
said processing unit (3) comprising
an image splitting component (6) for splitting an image into different image parts and a deconvolution component (8, 8a) for performing a deconvolution on a subset comprising one or more image parts.

10. System according to claim 9,
wherein the processing unit (3) selects said subset of one or more image parts in such a way, that said group comprises the majority of image information.

11. System according to claim 9 or 10,
wherein said image splitting component (6) splits the image by use of frequency band splitting.

12. System according to any of the preceding claims,
wherein said image splitting component (6) splits the image by use of wavelet transformation and
wherein said image splitting component (6) splits the image into an approximation coefficients matrix, a horizontal detail coefficients matrix, a vertical detail coefficients matrix and a diagonal detail coefficients matrix.

13. System according to claim 12,
wherein the deconvolution component (8, 8a) performs the deconvolution on the approximation coefficient matrix.

14. System according to any of the preceding claims,
wherein the deconvolution component (8, 8b) performs a simplified deconvolution on at least one of the image parts not being part of the subset.

15. Device (1) comprising a system according to any of claims 9 to 14.
